# EUROPÄISCHE PATENTSCHRIFT

(11) **EP 2 084 695 B1**
(45) Veröffentlichungstag und Bekanntmachung des Hinweises auf die Patenterteilung: **01.01.2014**
(21) Anmeldenummer: 07821423.6
(22) Anmeldetag: 17.10.2007
(51) Int. Cl.: G09F 9/37, G02B 26/02

(54) **BILDFLÄCHE ODER DISPLAY**
IMAGE SURFACE OR DISPLAY
PLAN D'IMAGE OU AFFICHEUR

(30) Priorität: 20.10.2006 DE 102006050404
(43) Veröffentlichungstag der Anmeldung: 05.08.2009
(73) Patentinhaber: ASPRE AG, 9050 Appenzell (CH)
(72) Erfinder: SACHER, Friedrich-Josef, 53842 Troisdorf (DE)
(74) Vertreter: Patentanwälte Freischem
(86) Internationale Anmeldenummer: PCT/EP2007/061058
(87) Internationale Veröffentlichungsnummer: WO 2008/046842

(56) Entgegenhaltungen:
- WO-A-2004/068208
- DE-A1-102005 008 834
- JP-A- 2003 140 169
- US-A1- 2004 246 426

## Beschreibung

### Technisches Gebiet

Die Erfindung bezieht sich auf eine Bildfläche, die sich aus zahlreichen rasterartig angeordneten Bildelementen oder Pixeln zusammensetzt, wobei jeder Pixel mindestens drei hintereinander angeordnete Farbspiegel aufweist, die von flachen, durchsichtigen Kammern gebildet sind, in die eine farbige Flüssigkeit oder ein farbloses, klar durchsichtiges flüssiges oder gasförmiges Fluid einbringbar ist. Ein Pixel ist das kleinste Bildelement einer Bildfläche, dem Farbe und Intensität zugeordnet werden kann. Ein Pixel hat drei übereinander angeordnete Farbspiegel, denen die Farben Rot - Grün - Blau oder die Farben Cyan - Magenta - Gelb, und gegebenenfalls einem hinteren vierten Farbspiegel, dem die Farbe Schwarz zugeführt werden kann. Hinter den Farbspiegeln ist eine weiße oder silbrige Reflexionsschicht angeordnet.

Die Farbflüssigkeit und das farblose Fluid können mittels Mikropumpen, Elektrophorese, Elektrowetting, Bubble pumps, Luftdruck oder dergleichen von einem hinter den Farbspiegeln befindlichen Reservoir zum Farbspiegel und zurück bewegt werden. Der Begriff "Farbspiegel" bezeichnet einen Fluidspiegel bestimmter Farbe, das heißt eine Schicht eines Fluids, welches eine bestimmte Farbe aufweist.

### Stand der Technik

Bildflächen und Pixel dieser Art sind bekannt aus US 6,037,955, EP 0 806 753, EP 1 090 384, WO 2004068208 und DE 102005008834.

Die Pixel und Farbspiegel der bekannten Bildflächen oder Displays dieser Art haben in der Bildebene eine rechteckige, insbesondere quadratische Form und sind möglichst ohne Abstand neben- und übereinander angeordnet.

Bei Displays oder Bildflächen, die von größerer Entfernung betrachtet werden und deren Pixel größer sein können, besteht bei rechteckigen oder quadratförmigen Pixeln oder Bildelementen der Nachteil, dass bei Betrachten der Bildfläche aus der Nähe ein störendes Gitter zu sehen ist, das sich aus horizontalen und vertikalen Linien zusammensetzt, die von den Trennwänden der die Farbspiegel bildenden Kammern erzeugt werden. Dieses Problem tritt auch bei Bildflächen auf, deren Pixel sich nicht aus hintereinander angeordneten flachen, durchsichtigen Kammern zusammensetzen, die mit einer klar durchsichtigen Flüssigkeit oder einer Farbflüssigkeit gefüllt werden können. Wie die US 2004/0246 A1 zeigt, wird zur Lösung dieses Problems bei Pixel, die beispielsweise von flüssigen Kristallen (LCD), light-emitting-dioden (LEDs) und dergleichen gebildet werden, vorgeschlagen, diesen eine hexagonale Form zu geben. Dabei hat ein Pixel sechs gleich große Seiten und zur Bildung einer Bildfläche liegt an jeder Seite eines Pixels ein gleich großer hexagonaler Pixel an.

### Darstellung der Erfindung

Der Erfindung liegt die Aufgabe zugrunde, eine Bildfläche der eingangsgenannten Art derart auszubilden, dass ihre Herstellung erleichtert ist und ihre Stabilität der aus mehreren aus durchsichtigem Material bestehenden und von Kammern sowie Kanälen durchsetzten Schichten verbessert ist. Ferner soll jeder Farbspiegel schnell und zuverlässig vollflächig oder teilflächig befüllbar sein.

Diese Aufgabe wird erfindungsgemäß mit den Merkmalen des Anspruchs 1 gelöst.

Die Sechseckform der Farbspiegel und damit auch der Pixel hat nicht nur optische Vorteile, sondern auch Vorteile bei der Herstellung der aus mehreren Schichten bestehenden Bildfläche, die von Hohlräumen und Kanälen durchsetzt ist.

Die Befüllung der hintereinander angeordneten Farbspiegeln für die Farben Rot, Grün, Blau oder die Farben Cyan, Magenta, Gelb erfolgt über Zuführkanäle, die an drei jeweils um 120° versetzten Seiten des sechseckigen Pixels angeordnet sind.

Die von flachen, durchsichtigen Kammern gebildeten Farbspiegel sind an einem, hinter der Bildebene befindlichen Reservoirs angeschlossen. Zwischen einem Reservoir und einem Farbspiegel ist ein Fluidstrom bewegbar, der sich zusammensetzt aus mindestens zwei nicht miteinander mischbaren Fluiden, von denen eins farblos und klar durchsichtig ist und das andere Fluid eine farbige Flüssigkeit ist. Die Herstellung der sich daraus zusammensetzenden Bildfläche lässt sich vereinfachen, wenn jeder Farbspiegel nicht über zwei, sondern nur über einen Kanal mit dem Reservoir verbunden ist und das Zuführen der Farbflüssigkeit und das gleichzeitige Abführen des farblosen Fluids mittels Elektrowetting erfolgt.

Durch die Anordnung von Elektroden entlang des flachen Kanals und der Kammer des Farbspiegels lässt sich die farbige Flüssigkeit, z.B. Wasser, durch Veränderung der Benetzbarkeit in den Farbspiegel bewegen, während gleichzeitig die farblose Flüssigkeit, z.B. Öl, aus dem Farbspiegel verdrängt wird und über der einströmenden Farbflüssigkeit hinweg abströmt. Zur schnellen und exakten Steuerbarkeit des Farbwechsels sollte der Kanal möglichst breit sein und breiter als die Hälfte oder ein Dreiviertel der Breite einer Seite des Sechsecks.

Das Volumen des farblosen Fluids ist dabei in der Praxis mindestens so groß wie das Volumen der Farbspiegel.

### Kurze Beschreibung der Zeichnungen

Nachfolgend werden Ausführungsbeispiele der Erfindung unter Bezugnahme auf die beigefügten Zeichnungen erläutert. Die Zeichnungen zeigen in:
- Fig. 1: eine Draufsicht auf ein Pixel, das drei hintereinander angeordnete Farbspiegel aufweist;
- Fig. 2: eine Ansicht nach der Schnittlinie II-II in Fig. 1,
- Fig. 3: eine Draufsicht auf einen Farbspiegel, dessen Kammer nur einen Kanal zum Zuführen und Abführen der Farbflüssigkeit aufweist,
- Fig. 4: eine Ansicht nach der Schnittlinie IV-IV in Fig. 3;
- Fig. 5: eine Draufsicht auf einen Teil der Bildfläche, deren Farbspiegel und Pixel die Form eines Sechsecks haben und die mit unterschiedlichen Farben befüllbar sind.

### Ausführungsform(en) der Erfindung

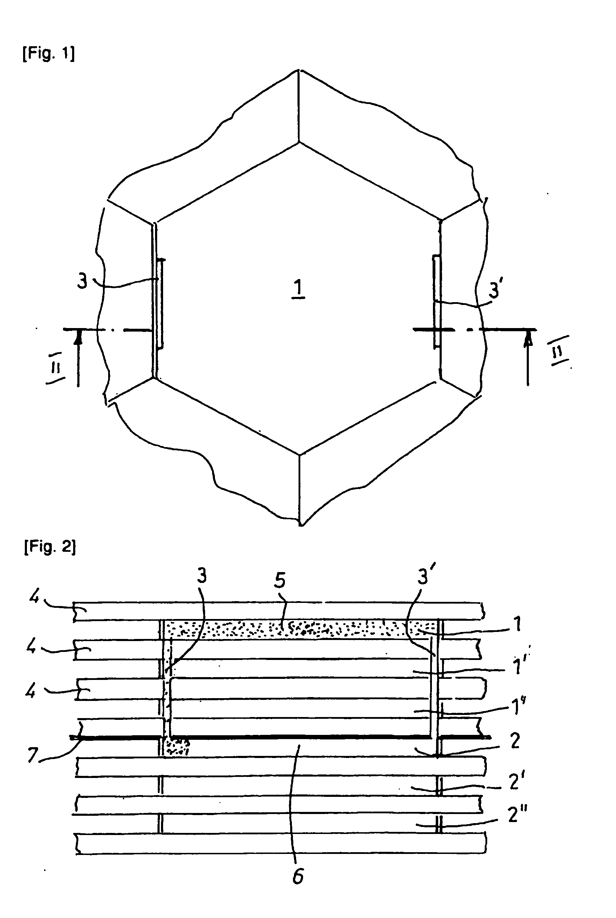

Die Fig. 1 und 2 zeigen ein Pixel, das sich aus drei übereinander angeordneten Farbspiegeln 1,1' und 1" zusammensetzt. Den Farbspiegeln 1,1',1" können je eine Farbflüssigkeit 5 der Farben Cyan, Magenta, Gelb oder Rot, Grün, Blau zugeführt werden oder eine farblose, klar durchsichtige Flüssigkeit 6.

Die Farbspiegel 1,1',1" sind über Kanäle 3 und 3' an Reservoirs 2,2',2" angeschlossen. Gemäß Fig. 2 ist der Farbspiegel 1 mit Farbflüssigkeit 5 gefüllt, während sich die farblose Flüssigkeit 6 im Reservoir 2 und im Kanal 3' befindet. Die Farbspiegel 1,1',1" sowie die Reservoirs 2,2',2" sind mittels klar durchsichtiger Folien oder Scheiben 4 voneinander getrennt. Die Dicke dieser Folien oder Scheiben 4 liegt im Bereich von 20 bis 70µm, vorzugsweise 50µm. Auch die Höhe der Farbspiegel 1,1' und 1" liegt im diesem Bereich. Die Größe der Sechseckfläche liegt vorzugsweise im Bereich von 1 bis 16 mm². Je weiter das Display vom Betrachter entfernt ist, umso größer kann die Fläche eines Pixels sein. Das Volumen der farblosen und klar durchsichtigen Flüssigkeit 6 ist mindestens so groß wie das Volumen des Farbspiegels 1,1',1", so dass der Farbspiegel stets voll mit klar durchsichtiger, farbloser Flüssigkeit gefüllt werden kann. Das Pixel erscheint weiß, wenn die drei Farbspiegel 1,1',1" mit farbloser Flüssigkeit oder Gas gefüllt sind, weil hinter den drei Farbspiegeln eine weiße oder silbrige Reflexionsschicht 7 angeordnet ist. Sind die drei Farbspiegel 1,1',1" mit ihren Farbflüssigkeiten ganzflächig gefüllt, dann erscheint das Pixel schwarz. Es kann aber auch zwischen der Reflexionsschicht 7 ein vierter Farbspiegel angeordnet werden, der mit einer schwarzen Farbflüssigkeit oder der farblosen Flüssigkeit befüllbar ist.

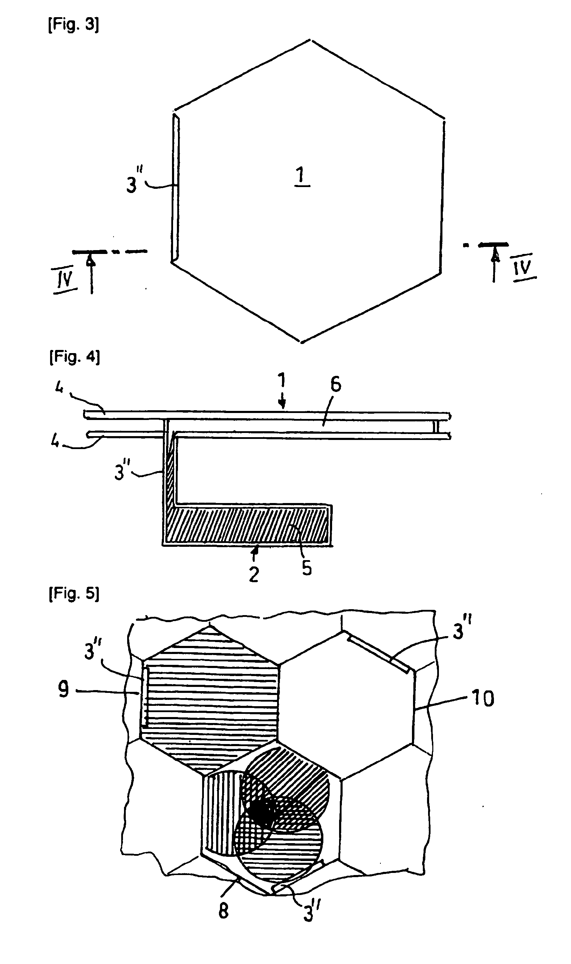

Der Farbspiegel 1 gemäß den Fig. 3 und 4 ist nur über einen flachen Kanal 3" am Reservoir 2 angeschlossen.

Mit Hilfe der Elektrowetting-Technik kann eine Flüssigkeit im Mikrometerbereich mit guter Steuergenauigkeit und Geschwindigkeit bewegt werden. Die Farbflüssigkeit kann im Wesentlichen Wasser sein und das farblose Fluid Öl oder Luft. Durch die Anordnung einer Reihe von Elektroden kann Flüssigkeit entlang der Elektrodenreihe bewegt werden, weil bei Anlegen einer Spannung die Benetzbarkeit der Wandung des Zuführkanals und des Farbspiegels erhöht wird. Bei entsprechender Anordnung der Elektroden am flachen Verbindungskanal 3" und am Farbspiegel 1 fließt die Farbflüssigkeit dann von Elektrode zu Elektrode in den Farbspiegel 1 und verdrängt gleichzeitig die farblose Flüssigkeit.

Fig. 5 zeigt drei Sechseck-Pixel 8,9 und 10. Die drei Farbspiegel des Pixels 8 sind nur teilweise mit Farbflüssigkeit gefüllt. Mindestens ein Farbspiegel des Pixels 9 ist vollflächig mit Farbflüssigkeit gefüllt. Die Farbspiegel des Pixels 10 sind vollflächig mit farbloser, klar durchsichtiger Flüssigkeit gefüllt, so dass das Pixel 10 weiß erscheint. Die Kanäle 3" zum Zuführen und Abführen der Farbflüssigkeit 5 der oberen Farbspiegel 1 der drei Pixel 8,9,10 sind jeweils um 120° versetzt. Auch bei den hintereinander angeordneten drei Farbspiegeln 1,1',1" eines Pixels sind die Kanäle 3" beziehungsweise deren Einmündungen an jeweils um 120° versetzten Seiten des Sechseck-Pixels angeordnet.

### Bezugszeichenliste:

- 1,1',1": Farbspiegel
- 2,2',2": Reservoir
- 3,3': Kanal
- 4: klar durchsichtige Folie oder Scheibe
- 5: Farbflüssigkeit
- 6: farbloses Fluid
- 7: weiße Reflexionsschicht
- 8-10: Sechseck-Pixel

## Patentansprüche

1. Bildfläche, die sich zusammensetzt aus zahlreichen elektronisch ansteuerbaren rasterartig angeordneten Pixeln, die mindestens drei hintereinander angeordnete Farbspiegel (1; 1'; 1") für die Farben Rot, Grün, Blau oder die Farben Cyan, Magenta, Gelb aufweisen, die von flachen durchsichtigen Kammern gebildet sind und die mit hinter der Bildebene befindlichen Reservoirs (2, 2', 2") verbunden sind, deren Inhalt durch elektronische Ansteuerung so bewegt werden kann, dass aus den Reservoirs Farbflüssigkeit in die Farbspiegel oder aus den Farbspiegeln in die Reservoirs gelangt, **dadurch gekennzeichnet, dass** die Farbspiegel (1) der Pixel in der Bildebene die Form eines gleichseitigen Sechsecks haben und dass die Kanäle (3,3') für die drei Farbspiegel (1) des Pixels an drei unterschiedlichen, jeweils um 120° versetzten Seiten des in der Bildebene sechseckigen Pixels angeordnet sind.

2. Bildfläche nach Anspruch 1, deren Farbspiegel (1,1',1") über je zwei Kanäle (3,3') mit den Reservoirs (2,2',2") verbunden sind, über welche die Farbflüssigkeit (5) oder die farblose Flüssigkeit (6) den Farbspiegeln (1,1',1") zu- und abgeführt wird, **dadurch gekennzeichnet, dass** die Kanäle (3,3') flach sind und ihre Breite mindestens ein Drittel der Breite einer Seite des Sechsecks haben und an zwei sich gegenüberliegenden Seiten und einander parallelen Seiten des Sechsecks einmünden.

3. Bildfläche oder Display nach Anspruch 2, **dadurch gekennzeichnet, dass** die Breite der mit Elektroden versehenen flachen Kanäle (3") größer ist als die Hälfte, vorzugsweise Dreiviertel der Breite einer Seite des Sechsecks.

4. Bildfläche oder Display nach Anspruch 1, deren Farbspiegel (1,1',1 ") mit Farbflüssigkeiten (5) oder farblosen Fluiden (6) befüllbar sind und zwischen den Reservoirs (2) und den Farbspiegeln ein Fluidstrom bewegbar ist, der sich zusammensetzt aus zwei nicht miteinander mischbaren Fluiden, von denen ein Fluid auch gasförmig sein kann und das andere Fluid eine Farbflüssigkeit ist, **dadurch gekennzeichnet, dass** die Farbspiegel (1,1',1") über je nur einen flachen Kanal (3") an den Reservoirs (2) angeschlossen sind, über die die Farbflüssigkeit (5) den Farbspiegeln (1,1',1") oder den Reservoirs (2) mittels Elektrowetting zugeführt und gleichzeitig das klar durchsichtige Fluid (6) abgeführt wird.

## Claims

1. Image surface which is composed of numerous electronically actuatable pixels arranged in a grid-like manner, which have at least three coloured mirrors (1; 1'; 1") arranged one behind the other for the colours red, green, blue or the colours cyan, magenta, yellow, which coloured mirrors are formed by flat transparent chambers and which are connected to reservoirs (2, 2', 2") located behind the image plane, the content of which can be moved by electronic actuation in such a manner that coloured fluid moves from the reservoirs into the coloured mirrors or from the coloured mirrors into the reservoirs, **characterised in that** the coloured mirrors (1) of the pixels in the image plane have the form of an equilateral hexagon and that the channels (3, 3') for the three coloured mirrors (1) of the pixel are arranged at three different sides, offset in each case by 120°, of the hexagonal pixel in the image plane.

2. Image surface according to Claim 1, the coloured mirrors (1, 1', 1") of which are connected via in each case two channels (3, 3') to the reservoirs (2, 2', 2") via which the coloured fluid (5) or the colourless fluid (6) can be conducted to and away from the coloured mirrors (1, 1', 1"), **characterised in that** the channels (3, 3') are flat and have a width of at least a third of the width of one side of the hexagonal and open out on two opposing sides and parallel sides of the hexagonal.

3. Image surface or display according to Claim 2, **characterised in that** the width of the flat channels (3") provided with electrodes is greater than half, preferably three-quarters of the width of one side of the hexagonal.

4. Image surface or display according to Claim 1, the coloured mirrors (1, 1', 1") of which can be filled with coloured fluids (5) or colourless fluids (6) and a flow of fluid can be moved between the reservoirs (2) and the coloured mirrors, which flow of fluid is composed or two fluids which cannot be mixed with one another, of which one fluid can also be gaseous and the other fluid is a coloured fluid, **characterised in that** the coloured mirrors (1, 1', 1") are connected via in each case only one flat channel (3") to the reservoirs (2) via which the coloured fluid (5) can be conducted to the coloured mirrors (1, 1', 1") or the reservoirs (2) by means of electro-wetting and simultaneously the clearly transparent fluid (6) is conducted away.

## Revendications

1. Surface d'image se composant de nombreux pixels agencés à la manière d'un réseau, pouvant être contrôlé de manière électronique, lesdits pixels présentant au moins trois niveaux de colorant (1, 1', 1") agencés les uns derrière les autres pour les couleurs rouge, vert, bleu ou les couleurs cyan, magenta, jaune, qui sont formés de chambres transparentes plates et qui sont reliés à des réservoirs (2, 2', 2") se trouvant derrière la surface d'image, le contenu desdits réservoirs pouvant être déplacé par commande électronique de sorte que du liquide coloré issu des réservoirs parvient dans les niveaux de colorant ou est issu des niveaux de colorant et parvient dans les réservoirs, **caractérisée en ce que** les niveaux de colorant (1) des pixels dans le plan d'image présentent la forme d'un hexagone régulier et les canaux (3, 3') pour les trois niveaux de colorant (1) du pixel sont agencés au niveau de trois côtés différents, respectivement décalés de 120°, du pixel hexagonal situé dans le plan d'image.

2. Surface d'image selon la revendication 1, dont les niveaux de colorant (1, 1', 1") sont reliés aux réservoirs (2, 2', 2") par l'intermédiaire de respectivement deux canaux (3, 3'), par l'intermédiaire desquels le liquide coloré (5) ou le liquide incolore (6) des niveaux de colorant (1, 1', 1") est amené ou évacué, **caractérisée en ce que** les canaux (3, 3') sont plats et leur largeur représente au moins un tiers de la largeur d'un côté de l'hexagone et ils débouchent au niveau de deux côtés de l'hexagone se faisant face et parallèles l'un à l'autre.

3. Surface d'image ou affichage selon la revendication 2, **caractérisée en ce que** la largeur des canaux (3") plats munis d'électrodes est supérieure à la moitié, de manière préférée les trois-quarts, de la largeur d'un côté de l'hexagone.

4. Surface d'image ou affichage selon la revendication 1, dont les niveaux de colorant (1, 1', 1") peuvent être remplis avec des liquides colorés (5) ou des fluides incolores (6) et un courant de fluide est mobile entre les réservoirs (2) et les niveaux de colorant, ledit courant de fluide se composant de deux fluides non miscibles l'un avec l'autre, parmi lesquels un fluide peut aussi être sous forme gazeuse et l'autre fluide est un liquide coloré, **caractérisée en ce que** les niveaux de colorant (1, 1', 1") sont raccordés aux réservoirs (2) par l'intermédiaire de respectivement seulement un canal plat (3"), par l'intermédiaire duquel le liquide coloré (5) est amené aux niveaux de colorant (1, 1', 1") ou aux réservoirs (2) au moyen d'un électromouillage et le fluide (6) transparent incolore est simultanément éliminé.
